# EUROPEAN PATENT APPLICATION

(11) **EP 3 006 203 A1**
(43) Date of publication of application: **13.04.2016**
(21) Application number: 15188281.8
(22) Date of filing: 05.10.2015
(51) Int. Cl.: B32B 17/10, B32B 7/02, B32B 27/18, B32B 27/22, B32B 27/30

(54) **MULTILAYER FILMS OF PLASTICIZER-CONTAINING POLYVINYL ACETAL WITH PHOTOCHROMIC PROPERTIES**

(30) Priority: 08.10.2014 EP 14188179
(71) Applicant: Kuraray Europe GmbH, 65795 Hattersheim (DE)
(72) Inventor: MUGURUMA, Shinichi, 53840 Troisdorf (DE)
(74) Representative: Kisters, Michael Marcus

(57) **Abstract**

The invention relates to an photochromic interlayer film for laminated glass composed of at least two individual films based on plasticizer-containing polyvinyl acetal, characterized in that said individual films comprise at least one photochromic compound and have a glass transition temperature which differs at least by 5 K.

## Description

### TECHNICAL FIELD

The invention relates to a plasticizer-containing film suitable as interlayer in laminated safety glass, said film being composed of at least two individual films based on plasticizer-containing polyvinyl acetals wherein the individual films comprise photochromic compounds and have different glass transition temperatures.

### PRIOR ART

Laminated safety glass generally consists of two glass panels and an intermediate film, which bonds the glass panels together. Plasticizer-containing, partially acetalized polyvinyl alcohol (polyvinyl acetal), in particular polyvinyl butyral (PVB) is predominantly used as film material. Laminated safety glass (LSG) is used for example as windshields or side windows in the automotive sector and as safety glass in the construction sector.

In order to reduce the amount of sunlight passing through laminated glass, it is long known to add pigments or dyes to the interlayer film of the laminated glass. Such pigmenting is known for windshields or architectural use to reduce heat transfer through the laminated glass.

Pigmenting or coloring the film reduces transparency permanently. In the absence of sunlight, especially at night, transparency might get too low. Therefore, photochromic compounds were introduced into the interlayer film, which change their color or darkness depending on the intensity of sunlight radiation applied on the film. Photochromic compounds change from a transparent or lightly colored state to a dark state by UV radiation. The back reaction from dark to transparent or lightly colored (bleaching) is usually temperature dependent. Such techniques are for example disclosed in US427742.

The bleaching reaction and therefore the switching time between transparent and dark state of the interlayer depends on the temperature of the glazing, resulting in fast bleaching at high temperatures and slow bleaching at low temperatures.

This may result in transparent films at higher temperature and darker films at lower temperature, regardless on the radiation applied on the film. Such switching behavior is not desirable since in summer (high temperature and high amount of radiation), a darker film is necessary to block sunlight (and vice versa in winter).

Accordingly it is an object of the invention to provide an interlayer film for laminated glazing with a reduced temperature-dependent switching behavior.

It was found that the speed of the bleaching reaction and therefore the switching time between transparent and dark state of the interlayer can be influenced by the Tg of the interlayer.

Rather than selecting a interlayer film having an average Tg as a compromise between high and low temperature for example in summer and winter, the present invention is based on selecting at least two individual photochromic interlayer films based on plasticizer-containing polyvinyl acetal having a different glass transition temperature. Each film shows a different switching behavior depending on the temperature. With such selection, the observed switching time appears to be nearly independent on temperature.

Object of the present invention is therefore a photochromic interlayer film for laminated glass composed of at least two individual films based on plasticizer-containing polyvinyl acetal, characterized in that said individual films comprise each at least one photochromic compound and have a glass transition temperature which differs at least by 5 K. Preferable, the glass transition temperatures of the individual films differ at least by 10, 15 or 20 K .

The difference in glass transition temperature may be accomplished by a different plasticizer content of the individual films. The plasticizer content of the individual films differs preferable by at least 5% by weight, more preferred by at least 10% by weight and especially by at least 15% by weight.

In another embodiment of the invention the difference in glass transition temperature may be accomplished by a different chemistry of the polyvinyl acetal in each individual film. Preferable, a first individual film comprises a polyvinyl acetal having a portion of polyvinyl acetate groups of 0.1 to 11 mol%, preferably 0.1 - 4 mol%, more preferably 0.1 - 2 mol%. Independent from the first individual film, a second individual film may comprise a polyvinyl acetal having a portion of polyvinyl acetate groups between 5 and 8 mol%, preferably between 5 and 7.9 mol%, more preferably between 5 and 7.5 mol%, most preferably between 5 and 7.5 mol%, or between 5.3 and 7.2 mol%.

In addition to photochromic features, the interlayer film may have sound-damping properties. In this embodiment of the invention, one or more of the individual films comprising photochromic compounds may have sound-damping properties. Furthermore, the interlayer film may comprise an additional individual film comprising no photochromic compounds and having sound-damping properties.

Determination of the sound-damping properties characteristics occurs in accordance with ISO/PAS 16940 (as of 07/16/2002) on a test piece consisting of an interlayer film having a thickness of 0.8 mm, which was laminated between two glass panels having a thickness of 2 mm. The first mode was determined each time.

The sound-absorbing effect of the interlayer films according to the invention should be highest at the application temperatures of the future glass laminate. With automotive glass, the application temperatures are at about 20 °C since the window is heated in winter and cooled by an air-conditioning unit in summer. In the test set-up mentioned above, films according to the invention preferably exhibit maximum damping in the temperature range of 17.5-22.5 °C; here in particular damping values of greater than 22 %, preferably greater than 23 %, and more preferably greater than 24 %.

Preferably, the films according to the invention exhibit in a 2 mm glass/ 0.8 mm film /2 mm glass laminate measured in accordance with ISO/PAS 16940 (as of 07/16/2002) for the first mode damping values at 10 °C of greater than 10 %, at 15 °C of greater than 10 %, and at 20 °C of greater than 21 %.

The individual films used according to the invention can each be used in almost any thickness provided that the sound insulation characteristics are not adversely altered. All individual films can for example have the same thickness; however, combinations of individual films of varying thickness are also possible.

The photochromic interlayer film can be composed of at least three individual films (A/B/A), wherein the two individual films on the outside of the interlayer film (A) have a glass transition temperature which differs at least by 5 K to the glass transition temperature of the individual film on the inside of the interlayer film (B).

In the preferred arrangement of the interlayer film according to the invention as triple-layer film A/B/A, the outer films A have largely the same thickness whereas the inner film B can be as thin as possible. With a total thickness of the multilayer film of 0,76 mm, the inner film may have a thickness of 0,075 bis 0,32 mm.

Multilayer films according to the invention preferably have the total thicknesses customary in industry of e.g. 0.38, 0.76, 1.14 mm (i.e. multiples of 0.38 mm).

The photochromic compound used in the present invention may be a organic dye or an inorganic pigment, for example the componds selected from the group consisting oftriarylmethanes, stilbenes, azastilbenes, nitrones, fulgides, spiropyrans, naphthopyrans, spiro-oxazines and quinones.

The following formula shows by way of example the switching reaction of a photochromic comound:

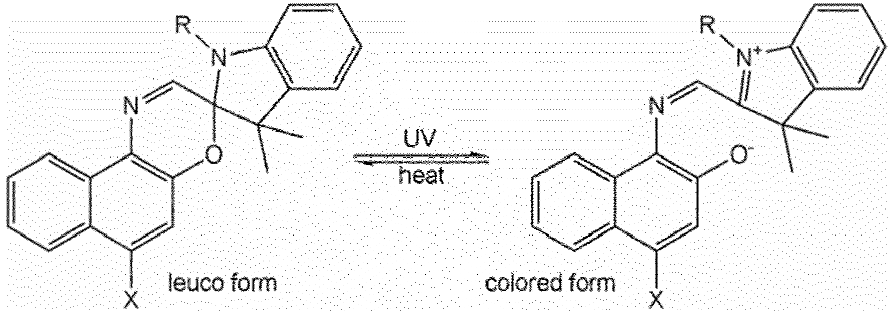

The individual films according to the invention comprise plasticizer-containing polyvinyl acetals obtained by acetalizing a fully or partially saponified polyvinyl alcohol with an aldehyde. The first individual film comprises a polyvinyl acetal with a portion of polyvinyl alcohol groups of 17-22% by weight, preferably 18-21% by weight and more preferably 19.5-20.5% by weight. Preferably, the second individual film comprises a polyvinyl acetal with a portion of polyvinyl alcohol groups of less than 14% by weight, preferably 11-13.5% by weight and more preferably less than 11.5-13% by weight.

The compatibility of plasticizer and partially acetalized polyvinyl alcohol generally diminishes with decreasing polar character of the plasticizer. Plasticizers of higher polarity are therefore more compatible with polyvinyl acetal than those having lower polarity. Alternatively, the compatibility of plasticizers of lower polarity increases with increasing degree of acetalization, i.e. with decreasing number of hydroxy groups and hence decreasing polarity of the polyvinyl acetal.

Because of the different portions of polyvinyl alcohol groups, the individual films can take up different amounts of plasticizer without exudation of the plasticizer occurring. Preferably, the individual films therefore comprise a plasticizer content differing by at least 5% by weight, more preferably at least 7.5% by weight and most preferably by at least 10% by weight based on the film formulation.

The individual films can contain the same or different plasticizers. The use of the same plasticizers is preferred; the composition of plasticizer blends in the individual films possibly changing somewhat as a result of migration.

The individual films can comprise plasticizers or plasticizer blends of at least one of the following plasticizers known for PVB film:
- esters of multivalent aliphatic or aromatic acids, for example dialkyl adipates such as dihexyl adipate, dioctyl adipate, hexyl cyclohexyl adipate, mixtures of heptyl and nonyl adipates, diisononyl adipate, heptyl nonyl adipate and esters of adipic acid with cycloaliphatic or ether linkages-containing ester alcohols, dialkyl sebacates such as dibutyl sebacate and esters of sebacic acid with cycloaliphatic or ether linkages-containing ester alcohols, esters of phthalic acid such as butyl benzyl phthalate or bis-2-butoxyethyl phthalate, esters of cyclohexanedicarboxylic acid such as 1,2-cyclohexanedicarboxylic acid diisononyl ester
- esters or ethers of multivalent aliphatic or aromatic alcohols or oligoether glycoles with one or more unbranched or branched aliphatic or aromatic substituents, such as for example esters of di-, tri-or tetraglycoles with linear or branched aliphatic or cycloaliphatic carboxylic acids; diethylene glycol bis(2-ethyl hexanoate), triethylene glycol bis(2-ethyl hexanoate), triethylene glycol bis(2-ethyl butanoate), tetraethylene glycol bis-n-heptanoate, triethylene glycol bis-n-heptanoate, triethylene glycol bis-n-hexanoate, tetraethylene glycol dimethyl ether and/or dipropylene glycol benzoate can serve as examples for the latter group
- phosphates with aliphatic or aromatic ester alcohols such as for example tris(2-ethylhexyl) phosphate (TOF), triethyl phosphate, diphenyl-2-ethylhexyl phosphate, and/or tricresyl phosphate, esters of citric acid, succinic acid and/or fumaric acid

Particularly preferably, one or more of the following plasticizers is used:
- di(2-ethylhexyl) sebacate (DOS), di(2-ethylhexyl) adipate (DOA), dihexyl adipate (DHA), dibutyl sebacate (DBS), triethylene glycol bis-n-heptanoate (3G7), tetraethylene glycol bis-n-heptanoate (4G7), triethylene glycol bis(2-ethyl hexanoate) (3GO or 3G8), tetraethylene glycol bis(n-2-ethyl hexanoate) (4GO or 4G8), di(2-butoxyethyl) adipate (DBEA), di (2-butoxyethoxyethyl) adipate (DBEEA) di(2-butoxyethyl) sebacate (DBES), di(2-ethylhexyl) phthalate (DOP), diisononyl phthalate (DINP), triethylene glycol bis-isononanoate, triethylene glycol bis(2-propyl hexanoate), 1,2-cyclohexanedicarboxylic acid diisononyl ester (DINCH), tris(2-ethylhexyl) phosphate (TOF) and dipropylene glycol benzoate

In addition, the individual films according to the invention can comprise further additives known to those skilled in the art such as residual amounts of water, UV absorber, antioxidants, adhesion regulators, optical brighteners, stabilizers, colorants, processing aids, organic or inorganic nanoparticles, fumed silica and/or surface active substances.

In a variant of the invention, all individual films comprise the additives mentioned in largely the same concentration. In a particular variant of the invention, at least one of the individual films does not comprise adhesion regulators (antiblocking agents). Within the scope of the present invention, antiblocking agents mean compounds with the help of which the adhesion of plasticizer-containing polyvinyl acetal films to glass surfaces can be adjusted. Compounds of this type are known to those skilled in the art; in practice, alkali or alkaline earth metal salts of organic acids, such as for example potassium/magnesium acetate, are frequently used for this.

To produce polyvinyl acetal, polyvinyl alcohol is dissolved in water and acetalized with an aldehyde such as butyraldehyde with addition of an acid catalyst. The precipitated polyvinyl acetal is separated, washed to neutrality, optionally suspended in an aqueous medium rendered alkaline, afterwards again washed to neutrality, and dried.

The polyvinyl alcohol content of the polyvinyl acetal can be adjusted through the quantity of the aldehyde used in the acetalization. It is also possible to perform the acetalization using other or several aldehydes having 2-10 carbon atoms (for example valeraldehyde).

The films based on plasticizer-containing polyvinyl acetal preferably contain uncrosslinked polyvinyl butyral (PVB) obtained by acetalizing polyvinyl alcohol with butyraldehyde.

The use of crosslinked polyvinyl acetals, in particular crosslinked polyvinyl butyral (PVB), is also possible. Suitable crosslinked polyvinyl acetals are described for example in EP 1527107 B1 and WO 2004/063231 A1 (thermal self-crosslinking of carboxyl group-containing polyvinyl acetals), EP 1606325 A1 (polyvinyl acetals crosslinked with polyaldehydes), and WO 03/020776 A1 (Polyvinyl acetals crosslinked with glyoxylic acid). The disclosure of these patent applications is fully incorporated herein by reference.

Terpolymers of hydrolyzed vinyl acetate/ethylene copolymers can also be used as polyvinyl alcohol within the scope of the present invention. These compounds are normally hydrolyzed to more than 92 mol% and contain 1 to 10% by weight of ethylene-based units (for example type "Exceval" of Kuraray Europe GmbH).

Furthermore, hydrolyzed copolymers made of vinyl acetate and at least one additional ethylenically unsaturated monomer can also be used as polyvinyl alcohol within the scope of the present invention.

Within the scope of the present invention, the polyvinyl alcohols can be used pure or as a mixture of polyvinyl alcohols having a different degree of polymerization or degree of hydrolysis. It is possible that the interlayer films according to the invention consist of 2, 3, 4 or 5 individual films, adjacent individual films having the mentioned different properties.

Preferably, the films according to the invention have three individual films, the first and third individual film being identical.

To produce the films according to the invention, the individual films can first be produced individually by extrusion and subsequently joined mechanically to the interlayer film according to the invention for example by winding them up together on a film winder.

It is also possible to produce the interlayer film by simultaneous coextrusion of the individual films. The coextrusion can for example occur using an appropriately equipped coextrusion die or a feed block.

In the automotive sector, films having a so-called tinted band in the upper region are frequently used. For this, either the upper part of the film can be coextruded with an appropriately pigmented polymer melt, or one of the individual films in a multilayer system can have a different color. In the present invention, this is realizable by complete or partial pigmenting of at least one individual film.

The production of the films or individual films according to the invention normally occurs by extrusion or coextrusion which yield under certain conditions (melt pressure, melt temperature and die temperature) a melt fracture surface, i.e. a stochastic surface roughness.

Alternatively, a regular, non-stochastic roughness can be embossed onto an already produced interlayer film according to the invention by an embossing process between at least one pair of rollers. Embossed films normally have improved deaeration characteristics during laminated glass production and are preferably used in the automotive sector.

Films according to the invention have, independent of the production method, a surface structure applied to one side or more preferably to both sides with a roughness R_{Z} of 15 to 150 µm, preferably a R_{Z} of 15 to 100 µm, more preferably a R_{Z} of 20 to 80 µm, and most preferably a R_{Z} of 40 to 75 µm.

Films according to the invention are also well suited for the production of glass/film/plastic laminates, such as for example for the permanent bonding of a glass panel with a PET layer. The bonding of two plastic panels, for example made of polycarbonate or PMMA, is also doable with the films according to the invention.

The films according to the invention can be used in particular for the production of laminated safety glass by laminating with one or more glass panels in a manner known to those skilled in the art. The laminated safety glass can be used in the automotive sector, for example as windshield, or also in the architectural sector, for example in windows or transparent facade elements, or in furniture manufacturing.

A further use of the films according to the invention is in the production of photovoltaic modules.

The production and composition of films based on polyvinylacetals is described in principle for example in EP 185 863 B1, EP 1 118 258 B1, WO 02/102591 A1, EP 1 118 258 B1 or EP 387 148 B1.

### MEASURING PROCEDURES

Determination of the Polyvinyl Alcohol and Polyvinyl Acetate Content of PVB occurs in accordance with ASTM D 1396-92. The degree of acetalization (= butyral content) can be calculated as the portion that needs to be added to the sum of polyvinyl alcohol and polyvinyl acetate content determined in accordance with ASTM D 1396-92 to reach one hundred. The conversion of wt% into mol% occurs according to formulas known to those skilled in the art.

Determination of the Glass Transition Temperature of the partially acetalized polyvinyl alcohol occurs by means of Differential Scanning Calorimetry (DSC) in accordance with DIN 53765 using a heating rate of 10 K/min in the temperature interval of -50 °C - 150 °C. A first heating ramp, followed by a cooling ramp, followed by a second heating ramp is used. The position of the glass transition temperature is determined from the measured curve associated with the second heating ramp in accordance with DIN 51007. The DIN center (Tg DIN) is defined as intersection of a horizontal line at half step height with the measured curve. The step height is defined by the vertical distance of the two intersections of the middle tangent with the base lines of the measured curve before and after the glass transition.

### Measurement of the Fading Kinetics

The absorption spectra were recorded using UV-vis spectrometer with a 50 KLux xenon lamp that filtered to Air Mass 2 conditions used for irradiation.

The fading time ( T ½) was calculated as the time in seconds for the fully activated photochromic dye to fade to 50% of its overall photochromic activation.

### EXAMPLES

### Preparation of Polyvinyl Acetals Having different Residual Acetate Content

### PVB 1:

100 parts by weight of Polyvinyl alcohol Mowiol 29-99 (commercial product of Kuraray Europe GmbH) was dissolved in 1075 parts by weight of water with heating 90 °C. At a temperature of 40 °C., 56.8 parts by weight of n-butyraldehyde was added, and at a temperature of 12°C. while stirring, 75 parts by weight of 20% hydrochloric acid was added. The mixture was heated to 69 °C. after the polyvinyl butyral (PVB) had precipitated and stirred at this temperature for 2 hours. The PVB was separated after cooling to room temperature, washed to neutrality with water, and dried. A PVB having a polyvinyl alcohol content of 20.0% by weight (28.8 mol %) and a polyvinyl acetate content of 1.3% by weight (1 mol %) was obtained.

### PVB 2:

The PVB preparation occurred in accordance with Example 1; 100 parts by weight of polyvinyl alcohol Mowiol 30-92 (commercial product of Kuraray Europe GmbH) with a degree of hydrolysis of 93.1 mol % and 73 parts by weight of n-butyraldehyde were used. A PVB having a polyvinyl alcohol content of 11.6% by weight (17.7 mol %) and a polyvinyl acetate content of 9.1% by weight (7.1 mol %) was obtained.

For the purpose of this invention, different PVB films were produced with the composition as shown in table 1. Reversacol Humber Blue and Reversacol Pennine Green (commercial product of Vivimed Labs Ltd) were used as photochromic dye. The mixing ratio of the dyes was 1:1 by weight.

Table 2 shows the fading time of the individual films A and B and in example 1 a trilayer film obtained by co-lamination of films 1 and 2. Table 3 shows the improvement of fading time ratio achieved by the laminates of the invention. The laminate of example 1 shows as fast fading as example 3 at low temperature and as example 2 at high temperature. Such laminates are useful in all-year conditions.

**Table 1**

| | | Plasticizer | | Photochromic dye | Glass Transition |
|---|---|---|---|---|---|
| Example | PVB | 3G8 | DBEA | | Temperature |
| | | wt% | wt% | wt% | °C |
| A | 1 | 25.0 | 2.5 | 0.24 | 19 |
| B | 2 | 31.8 | 3.2 | 0.24 | -1 |

**Table 2**

| Example | Layer | Layer thickness | Fading time( T ½) | | |
|---|---|---|---|---|---|
| | | mm | at 10 °C | at 23 °C | at 38 °C |
| 1 | Tri(A/B/A) | 0.2/0.4/0.2 | 270 | 62 | 13 |
| 2 | Mono (A) | 0.8 | 330 | 68 | 14 |
| 3 | Mono (B) | 0.8 | 260 | 56 | 11 |

**Table 3**

| Example | Layer | Layer thickness | | Fading time ratio | |
|---|---|---|---|---|---|
| | | mm | | (at 10 °C/at 38 °C) | |
| 1 | Tri(A/B/A) | 0.2/0.4/0.2 | | 21 | |
| 2 | Mono (A) | 0.8 | | 24 | |
| 3 | Mono (B) | 0.8 | | 24 | |

## Claims

1. Photochromic interlayer film for laminated glass composed of at least two individual films based on plasticizer-containing polyvinyl acetal, **characterized in that** said individual films comprise at least one photochromic compound and have a glass transition temperature which differs at least by 5 K.

2. Photochromic interlayer film according to claim 1, **characterized in that** said individual films have a plasticizer content that differs by at least 5% by weight.

3. Photochromic interlayer film according to claim 1 or claim 2, **characterized in that** said second individual film comprises a polyvinyl acetal with a portion of polyvinyl alcohol groups of less than 14% by weight.

4. Photochromic interlayer film according to any one of claims 1 to 3, **characterized in that** said first individual film comprises a polyvinyl acetal with a portion of polyvinyl alcohol groups of 17 to 22% by weight.

5. Photochromic interlayer film according to any one of claims 1 to 4, **characterized in that** said second individual film comprises a polyvinyl acetal with a portion of polyvinyl acetate groups of 0.1 to 11 mol%.

6. Photochromic interlayer film according to any one of claims 1 to 5, **characterized in that** said first individual film comprises a polyvinyl acetal with a portion of polyvinyl acetate groups of between 5 and 8 mol%.

7. Photochromic interlayer film according to any one of claims 1 to 6, **characterized in that** the individual films comprise at least one photochromic compound selected from the group consisting of triarylmethanes, stilbenes, azastilbenes, nitrones, fulgides, spiropyrans, naphthopyrans, spiro-oxazines and quinones.

8. Photochromic interlayer film according to any one of claims 1 to 7 **characterized in that** the interlayer film is composed of at least three individual films wherein the two individual films on the outside of the interlayer film have a glass transition temperature which differs at least by 5 K to the glass transition temperature of the individual films on the inside of the interlayer film.

9. Photochromic interlayer film according to any one of claims 1 to 8, **characterized in that** the interlayer film is produced by coextrusion of the individual films.

10. The use of the photochromic interlayer film according to any one of claims 1 to 9 in the automotive sector, in windshields, in the architectural sector or in facade elements modules.
